# EUROPEAN PATENT SPECIFICATION

(11) **EP 0 780 431 B1**
(45) Date of publication and mention of the grant of the patent: **31.05.2000**
(21) Application number: 96120442.7
(22) Date of filing: 18.12.1996
(51) Int. Cl.: C08L 23/08, C08L 29/04

(54) **Resin composition and shaped article having a layer comprising the same**
Harzzusammensetzung und geformter Gegenstand mit einer diese enthaltenden Schicht
Composition de résine et article moulé qui contient une couche à base de cette composition

(30) Priority: 19.12.1995 JP 33033495; 09.08.1996 JP 21148196; 26.08.1996 JP 22377896; 30.10.1996 JP 28839496
(43) Date of publication of application: 25.06.1997
(73) Proprietor: SUMITOMO CHEMICAL COMPANY LIMITED, Osaka-shi, Osaka 541-0041 (JP)
(72) Inventor: Kuroda, Ryuma, Ibaraki-shi, Osaka-fu (JP); Sakaya, Taiichi, Takatsuki-shi, Osaki-fu (JP); Ogawa, Tadatoshi, Toyonaka-shi, Osaka-fu (JP)
(74) Representative: VOSSIUS & PARTNER

(56) References cited:
- EP-A- 0 258 506
- US-A- 4 684 439

## Description

The present invention relates to a resin composition with good stretchability comprising a saponified ethylene-vinyl ester copolymer and its use. The resin composition of the present invention and a shaped article having a layer comprising such the resin composition have gas barrier properties due to the saponified ethylene-vinyl ester copolymer.

Polyvinylidene chloride (PVDC) is one of resins having good gas barrier properties, and packaging films or sheets having a layer comprising PVDC are widely used. However, the films having the PVDC layer should be avoided because of the inclusion of chlorine atoms.

Saponified ethylene-vinyl ester (EVOH) copolymers are known as the resin materials having good gas barrier properties and transparency. However, it is difficult to produce a film of EVOH, since EVOH has insufficient stretchability.

A known film comprising EVOH is a film obtained by stretching a raw sheet (unstretched sheet) comprising an EVOH layer and a polyamide (PA) layer having resistance to pin-hole formation (flexibility) which is laminated on the EVOH layer (see JP-A-52-115880). Still, the sufficiently stretched film has not been obtained since EVOH has the insufficient stretchability.

JP-A-53-88067 and JP-A-59-20345 disclose resin compositions comprising EVOH and various plasticizers, but those compositions have drawbacks such as significant decrease of the gas barrier properties and bleeding of the plasticizers.

Compositions comprising EVOH and PA, which are disclosed in JP-A-52-141785, JP-A-58-154755, JP-A-58-36412, JP-B-44-24277, JP-B-60-24813 and JP-A-58-129035, have a drawback that a large amount of gel forms in the composition.

A composition comprising EVOH and other thermoplastic resin (e.g. ethylene-acrylate copolymers) disclosed in JP-A-61-220839 has insufficient transparency.

JP-A-61-233537 discloses a multilayer container produced by blowing a laminate comprising an EVOH layer and a pair of layers made of ethylene-α-olefin copolymer which are laminated on respective surfaces of the EVOH layer. However, this container has streaks caused by stretching irregularity of EVOH and therefore unsatisfactory appearance.

An object of the present invention is to provide a resin composition comprising EVOH which has good stretchability.

Another object of the present invention is to provide a shaped article having a layer comprising EVOH which has good stretchability.

Accordingly, the present invention provides a resin composition comprising 2 to 30 wt. parts of a polyaminoamide and 98 to 70 wt. parts of a saponified ethylene-vinyl ester copolymer which comprises 20 to 60 % of ethylene units based on the whole monomeric units and has a saponification degree for the vinyl ester units of at least 90 %.

The resin composition of the present invention has good stretchability, flexibility and resistance to pin-hole formation, and therefore can be used in various applications.

Furthermore, the present invention provides a shaped article having at least one layer comprising the above resin composition according to the present invention.

The shaped article may be a single layer article or a multilayer article comprising at least one layer of the resin composition of the present invention and at least one layer of another resin.

The shape of the article is not limited and may be e.g. a film, sheet, tube, cup, bottle, bag or inner container for a bag-in-box.

The multilayer article can have various additional functions such as heat-sealability depending on the properties of the other resin for the layer which is laminated on the layer of the resin composition of the present invention.

The resin composition of the present invention comprises 2 to 30 wt. parts of a polyaminoamide and 98 to 70 wt. parts of a saponified ethylene-vinyl ester copolymer which comprises 20 to 60 % of ethylene units based on the whole monomeric units and has a saponification degree of the vinyl ester units of at least 90 %.

Hereinafter, the polyaminoamide and saponified ethylene-vinyl ester copolymer will be referred to as "PAA" and "EVOH", respectively.

PAA comprises polycarboxylic acid units and polyamine units which are bonded to each other, and is obtained by copolymerizing a polycarboxylic acid and a polyamine.

A polycarboxylic acid is a carboxylic acid having at least two carboxyl groups in a molecule and includes e.g. a dicarboxylic acid and a tricarboxylic acid, among which the dicarboxylic acid is preferable. Specific examples of dicarboxylic acid are aliphatic dicarboxylic acids such as malonic acid, succinic acid, glutaric acid, adipic acid, pimelic acid, suberic acid, azelaic acid, sebacic acid, dodecanedioic acid, tetradecanedioic acid, hexadecanedioic acid, octadecanedioic acid, octadecenedioic acid, eicosanedioic acid, eicosenedioic acid, docosanedioic acid, 2,2,4-trimethyladipic acid and polymerized natural fatty acids (e.g. polymers of soybean oil fatty acid, safflower oil fatty acid and tall oil fatty acid); alicyclic dicarboxylic acids such as 1,4-cyclohexanedicarboxylic acids; and aromatic dicarboxylic acids such as terephthalic acid, isophthalic acid, phthalic acid and xylenedicarboxylic acid. Among them, the aliphatic dicarboxylic acids, in particular, adipic acid, azelaic acid and polymerized natural fatty acids are preferable.

The polyamine is an amine having at least two amino and/or imino groups in a molecule. Examples of the polyamine are polyalkylenepolyamines such as diethylenetriamine, triethylenetetramine, tetraethylenepentamine, iminobispropylamine, spermine, spermidine and bis(hexamethylene)triamine. Among them, diethylenetriamine, triethylenetetramine, tetraethylenepentamine and bis(hexamethylene)triamine are preferable.

In addition, one or more monocarboxylic acids in an amount of 20 mole % or less of the polycarboxylic acid and/or one or more monoamines in an amount of 20 mole % or less of the polyamine may be used in the copolymerization of the polycarboxylic acid and polyamine for adjusting the polymerization degree.

Examples of the monocarboxylic acid are aliphatic monocarboxylic acids such as acetic acid, propionic acid, butyric acid, valeric acid, caproic acid, enanthic acid, caprylic acid, capric acid, pelargonic acid, undecanoic acid, lauric acid, tridecanoic acid, myristic acid, myristoleic acid, palmitic acid, stearic acid, oleic acid, linolic acid, arachic acid, behenic acid, and natural fatty acids (e.g. soybean oil fatty acid, safflower oil fatty acid and tall oil fatty acid); alicyclic monocarboxylic acids such as cyclohexanecarboxylic acid and methylcyclohexanecarboxylic acid; and aromatic monocarboxylic acids such as benzoic acid, toluic acid, ethylbenzoic acid and phenylacetic acid.

Examples of the monoamine are aliphatic monoamines such as methylamine, ethylamine, propylamine, butylamine, pentylamine, hexylamine, heptylamine, octylamine, 2-ethylhexylamine, nonylamine, decylamine, undecylamine, dodecylamine, tridecylamine, tetradecylamine, pentadecylamine, hexadecylamine, octadecylamine, eicosylamine and dococylamine; alicyclic monoamines such as cyclohexylamine and methylcyclohexylamine; and aromatic monoamines such as benzylamine and β-phenylamine.

The amine value of PAA is preferably between 100 and 550, more preferably between 150 and 500 when measured according to JIS K 7237, in view of the stretchability at low temperature and resistance to bleeding. The resin composition comprising PAA having such the amine value is suitable for the formation of films having good heat shrinkable properties at low temperature.

The content of the ethylene units in EVOH to be used according to the present invention is between 20 and 60 %, preferably between 20 and 45 %, more preferably between 25 and 40 % of the number of the whole monomeric units of EVOH, in view of the oxygen gas barrier properties of the resin composition.

Examples of the vinyl ester monomers which form the vinyl ester units in EVOH are vinyl acetate, vinyl propionate, vinyl versatate and vinyl pivalate. Among them, vinyl acetate and vinyl pivalate are preferable.

The saponification degree for the vinyl ester units is at least 90 %, preferably at least 95 %, more preferably at least 98 %. The thermal stability of EVOH decreases when the saponification degree is less than 90 %.

Herein, the saponification degree for the vinyl ester units is a percentage of the number of saponified vinyl ester units based on the total number of the unsaponified and saponified vinyl ester units. The saponification degree can be obtained from an IR spectrum.

Preferably, EVOH has a melt flow rate (MFR) of between 0.1 and 25 g/10 minutes according to JIS K 7210 (210°C, 2.16 kg).

EVOH may contain a minor amount (for example, 0 to 5 mole %) of at least one other polymerizable compound such as α-olefins (e.g. propylene, isobutene, 4-methylpentene-1, hexene and octene); unsaturated carboxylic acids (e.g. itaconic acid, methacrylic acid, acrylic acid and maleic acid) and their salts, partial or complete esters, nitriles, amides or anhydrides; vinylsilane compounds (e.g. vinyltrimethoxysilane); unsaturated sulfonic acids and their salts; alkylthiols and N-vinylpyrrolidone.

Two or more kinds of EVOH having different ethylene unit contents and/or different degrees of saponification may be used.

The weight ratio of PAA to EVOH in the resin composition of the present invention is usually between 2:98 and 30:70, preferably between 5:95 and 20:80 in view of the stretchability, flexibility (resistance to pin-hole formation) and gas barrier properties.

The oxygen permeability of the resin composition of the present invention is preferably between 0.01 and 200 cc/m².day.atm per 15 µm of thickness at 23°C under dry conditions.

The resin composition of the present invention may contain one or more additives such as other thermoplastic resins, rubbers, plasticizers, stabilizers, UV ray absorbers, antioxidants, fillers, antistatic agents, nucleators, colorants and lubricants, unless the effects of the present invention are deteriorated.

It is effective for the prevention of gel formation to add at least one agent selected from hydrotalcite compounds, hindered phenol stabilizers, hindered amine stabilizers and metal salts of higher aliphatic carboxylic acids (e.g. calcium stearate, magnesium stearate, etc.) in an amount of between 0.01 to 1 wt. % based on the weight of the resin composition.

The resin composition of the present invention can be prepared by compounding PAA, EVOH and the optional ingredients and additives by any conventional method. For example, the resin composition may be prepared in the form of pellets by melt kneading PAA and EVOH and extruding the mixture with a conventional single or twin screw extruder. When PAA is a highly viscous fluid or in the form of a solution in water or organic solvents, PAA or its solution is pumped in the extruder barrel through an inlet provided in the intermediate section of the barrel which melt kneads EVOH and then PAA and EVOH are melt kneaded, or the pellets of EVOH and PAA or its solution are blended with a mixer such as a Henschel mixer and supplied into and kneaded in the extruder. Alternatively, pellets of the preformulated master batch containing a high concentration of PAA in the matrix of EVOH is compounded with an additional amount of EVOH and kneaded so that the final weight ratio of PAA to EVOH falls in the above defined range. The preparation of the resin composition and its shaping can be performed continuously.

The resin composition of the present invention can be shaped e.g. in the form of a film, sheet, tube, cup, bottle bag or inner container for a bag-in-box by various processing methods. The shaped article may be a single layer article or a multilayer article having at least one layer of the resin composition of the present invention and at least one layer of other resin or resin composition.

Two or more layers of the resin compositions of the present invention may have the same or different compositions, and they may be adjacent to each other or separated by the layer of other resin. Also, two or more layers of the other resins may have the same or different compositions.

For example, the film, sheet or tube can be produced by a conventional stretching method such as uniaxial stretching, zone stretching, flat sequential stretching, simultaneous biaxial stretching and tubular strechting. The multilayer film or sheet can be produced e.g. by coextrusion, melt coating, extrusion laminating or dry lamination. The articles having other shapes can be produced by, for example, thermoforming, injection molding, blowing or extrusion blowing.

The shaped articles are preferably used as packages for foods, retort foods (boil-in-the-bag foods), medical products or electronic elements, or containers for fuels such as gasoline or kerosene.

The other resin used for the production of multilayer articles is selected according to the end use of the articles or the properties required for the articles.

Examples of the other resins are thermoplastic resins such as polyolefins (e.g. polyethylene, polypropylene and polybutene), copolymers comprising olefins, polystyrene, polyethylene terephthalate, polycarbonate, polyamide, ethylene-vinyl alcohol copolymer, polyvinylidene chloride, and mixtures thereof. Among them, polyethylene, polypropylene and their mixtures are preferred.

A layer of an adhesive resin is preferably interposed between the adjacent layers of the multilayer articles to increase the adhesion force between the adjacent layers. The kind of adhesive resin is not limited as long as it can prevent peeling off of the layers during the use of the articles.

Typical examples of the adhesive resin are modified olefin polymers having carboxyl groups. The modified olefin polymer may be prepared by chemically bonding an unsaturated carboxylic acid or its anhydride to polyolefin (e.g. low density polyethylene (LDPE), linear low density polyethylene (LLDPE), polypropylene and polybutylene) or a copolymer of an olefin and an unsaturated monomer (e.g. vinyl ester and unsaturated carboxylate) through the addition or grafting reaction. Preferable examples of the modified olefin polymers are polyethylene, polypropylene, ethylene-ethyl acrylate copolymer and ethylene-vinyl acetate copolymer to which maleic anhydride is grafted, and their mixtures.

A blend of the adhesive resin having the acid group and an olefin resin having no acid group may be used.

The laminated articles may have one or more regrind layers comprising regrinds such as trim scraps.

Now, examples of the multilayer articles having at least one layer comprising the resin composition of the present invention will be explained.

### (1) Multilayer films

The resin composition of the present invention can be used for the production of a multilayer film comprising a layer of the resin composition of the present invention (gas barrier layer) and a layer of other resin. For example, such the multilayer film having the gas barrier properties can be produced by forming an unstretched sheet comprising the layer of the resin composition of the present invention and the layer of other resin, and then stretching the sheet.

Among the resin compositions of the present invention, those having the oxygen permeability of 50 cc/m².day.atm or less per 15 µm of thickness at 23°C under dry conditions are preferably used.

The other resin may be the above described thermoplastic resin. In general, the multilayer film having the gas barrier properties and good heat shrinkable properties at low temperature can be obtained, when the other resin having the stretchability at low temperature (about 50 to 100°C) which is equal to or better than that of the resin composition of the present invention is selected. However, the multilayer film having the good heat shrinkage properties at low temperature may be obtained depending on the processing methods even when the other resin having the inferior stretchability to that of the resin composition of the present invention is used.

In a preferred example of the processing method, the unstretched multilayer film is stretched while heating the film to generate a temperature gradient across the film thickness so that the layer having the lower stretchability is kept at a higher temperature while the layer having the higher stretchability is kept at a lower temperature.

The multilayer film having good heat sealability can be obtained when a layer of a resin having heat sealability is formed as the outermost layer of the multilayer film. In general, polyolefin resins are used as the resins having the heat sealability. Examples of such the polyolefin resins are low density polyethylene (LDPE), ionomer resins or their precursors, linear ethylene-α-olefin copolymers [e.g. linear low density polyethylene (LLDPE), very low density polyethylene (VLDPE) and ultra low density polyethylene (ULDPE)] and ethylene-vinyl acetate copolymers. Furthermore, polyolefin resins prepared using metallocene catalysts (single site catalysts) are suitable.

The metallocene catalyst contains a compound which comprises a tetravalent transition metal such as titanium, zirconium, nickel, palladium, hafnium and platinum to which at least one cyclopentadienyl ring or its homolog is coordinated. The metallocene catalyst is also called as a single site catalyst since its catalytically active sites have the same properties.

The layer of the heat sealable resin in the multilayer film may be made easily peelable. In this case, ionomer resins and/or ethylene-methacrylic acid copolymers (EMAA) which contain blended polypropylene are used as the heat sealable resins.

The multilayer film according to the present invention may have the above adhesive resin layer or a layer of a following resin for reinforcing between the gas barrier layer of the resin composition of the present invention and the other layer.

The reinforcing resin is preferably polyamide. Examples of the polyamide include homopolyamides such as 6-Nylon, 6, 66-Nylon, 6,12-Nylon and MXD,6-Nylon (m-xylenediamine adipate); copolyamides such as caprolactam-hexamethylenediamine adipate copolymers, caprolactam-lauryllactam copolymers, lauryllactam-hexamethylenediammonium adipate copolymers, hexamethylene-diammonium adipate-hexamethylenediammonium sebacate copolymers, ethylenediammonium adipate-hexamethylenediammonium adipate copolymers and caprolactam-hexamethylene-diammonium adipate-hexamethylenediammonium sebacate copolymers; and amorphous polyamides such as 6/6T copolymer and 6/61 copolymers. They may be used as a blend of two or more of them.

The thicknesses of the multilayer film and each layer constituting the multilayer film are determined depending on the functions required for the film, and other factors.

When the multilayer film is a heat-shrinkable one, the whole thickness of the film is usually between 10 and 100 µm, preferably between 15 and 60 µm, and the thickness of the gas barrier layer is usually between 1 and 10 µm, preferably between 1 and 5 µm.

When the adhesive resin layer is present, its thickness is usually between 2 and 20 µm, preferably between 5 and 15 µm.

The total thickness of the layers of the other resins is between 35 and 90 %, preferably between 40 and 90 % of the whole thickness of the multilayer film.

The outermost layer of the multilayer film preferably contains an anti-fogging agent (or anti-misting agent) to prevent clouding of the multilayer film caused by adhesion of water droplets onto the film. Preferably, the anti-fogging agent is one having good compatibility to the resin which constitutes the layer containing the anti-fogging agent. Specific examples of the anti-fogging agent are fatty acid esters with polyhydric alcohols such as sorbitan fatty acid esters, glycerol fatty acid esters, polyglycerol fatty acid esters and propyleneglycol fatty acid esters; and ethylene oxide additives such as polyoxyethylene sorbitan esters.

The amount of the optionally used anti-fogging agent is usually between 0.05 and 3 wt. % based on the weight of the resin in the layer containing the anti-fogging agent.

The multilayer film may be produced by a per se conventional film stretching method such as uniaxial stretching, zone stretching, flat sequential stretching, simultaneous biaxial stretching or inflation strechting (tubular stretching).
Among them, the inflation stretching is preferred in view of the equipment costs. The resin composition of the present invention comprising PAA and EVOH is suitable for the inflation stretching, since the inflation stretching requires a raw material sheet having better stretchability than other stretching methods.

The multilayer film can be produced by employing the biaxial inflation method disclosed in JP-A-53-82888 as follows:

First, The resin and/or resin compositions which constitute the layers of the multilayer film are coextruded downward from an annular die of an extruder in the form of a tubular body having a multilayer structure. In this step, a liquid material (a pile agent) is supplied in a hollow portion of the tubular body to prevent the adhesion of facing parts of the inner wall of the body. Hereinafter, the tubular body will be referred to as "tube" irrespective of its shape.

Then, the tube is cooled in the cooling bath kept at a temperature of 20°C or less and located directly below the die, and withdrawn in a folded state while squeezing the pile agent from the tube with a first pair of nip rolls provided in the cooling bath. The folded tube is then placed in a hot water bath kept at a temperature between 50 and 95°C or hot air. Thereafter, the tube is simultaneously biaxially stretched in the machine (longitudinal) and cross (diameter) directions between a second pair of nip rolls and a third pair of nip rolls which rotate at a rotation speed three times higher than that of the second pair of nip rolls while cooling the tube at room temperature and continuously blowing air into the tube. The stretching temperature is suitably selected depending on the kinds of the resins used. Draw ratios are between about 1.5 and 5 times, preferably between about 2.5 and 3.5 times both in the machine and cross directions.

The multilayer film produced by the above inflation stretching method may be heat set at a suitable temperature, if necessary.

The above produced multilayer film has the heat shrinking properties such that an average value of the shrinkage factors in the machine and cross directions is at least 20 %, when heated at 75°C for one minute. The shrinkage factor is a percentage of the shrunk amount (the difference between the original (unshrunk) length and the length after shrinking) per the original length.

When an article is packaged with the tubular multilayer film having the heat sealability and heat shrinkability, for example, a heat shrinking packaging apparatus comprising a conventional pillow type packaging machine and heat shrinking tunnel which are connected in series can be employed. Such the apparatus achieves the high speed packaging.

### (2) Multilayer bottles

The resin composition of the present invention can be used to produce gas barrier multilayer bottles having the gas barrier layer of the resin composition of the present invention and one or more layers of other resin or resins. Typically, the multilayer bottle comprises an inner layer (the innermost layer of the bottle), an outer layer (the outermost layer of the bottle), the core (gas barrier) layer of the resin composition of the present invention between the inner and outer layers, and adhesive resin layers provided between the above layers for adhering those layers. The bottle may have a regrind layer.

The multilayer bottle according to the present invention has no streak due to the stretching irregularity in the gas barrier layer comprising EVOH and has good appearance.

The resin used for forming the outermost layer of the multilayer bottle is required to have good transparency, gloss and printability. Typical examples of the resins having those properties are polyester resins and polyolefin resins. The polyester resin is a polymer comprising acid units (for example, terephthalic acid units) and glycol units (for example, ethylene glycol units). The preferable polyester comprises the acid units at least 80 mole %, more preferably at least 90 mole % of which are the terephthalic acid units and the glycol units at least 70 mole %, more preferably at least 90 mole % are the ethylene glycol units.

Examples of the acid units other than the terephthalic acid units are those derived from aromatic dicarboxylic acids such as isophthalic acid, phthalic acid, naphthalene-1,4-dicarboxylic acid, naphthalene-2,6-dicarboxylic acid, diphenylether-4,4'-dicarboxylic acid, diphenyldicarboxylic acid and diphenoxyethanedicarboxylic acid; aliphatic dicarboxylic acids such as adipic acid, sebacic acid, azelaic acid and decane-1,10-dicarboxylic acid; and alicyclic dicarboxylic acids such as cyclohexanedicarboxylic acid. They may be used independently or in combination of two or more of them and contained in the polyester resin in an amount of less than 20 mole %, in particular, less than 10 mole % of the whole acid units.

Examples of the glycol units other than the ethylene glycol units are those derived from aliphatic glycols such as propylene glycol, trimethylene glycol, tetramethylene glycol, diethylene glycol, polyethylene glycol, polypropylene glycol, polytetramethylene glycol, hexamethylene glycol, dodecamethylene glycol and neopentyl glycol; alicyclic diols such as cyclohexane dimethanol; and aromatic diols such as 2,2-bis(4-β-hydroxyethoxyphenyl)propane. They may be used independently or in combination of two or more of them and contained in the polyester resin in an amount of less than 30 mole %, in particular, less than 10 mole % of the whole glycol units.

The polyolefin resins may be those exemplified above as the heat sealable ones. Here, the polyolefin resins obtained using the metallocene catalyst can be used also. In general, polypropylene obtained using the metallocene catalyst is syndiotactic polypropylene (s-polypropylene). This polypropylene is preferable for the formation of the inner layer of the multilayer bottle since it contains less oligomers or polymers having a low degree of polymerization which are easily eluted. Herein, polypropylene includes not only the propylene homopolymer but also copolymers of propylene with ethylene or at least one α-olefin such as 1-butene, 4-methylpentene-1, hexene-1 and octene-1.

The polypropylene obtained using the metallocene catalyst has a ratio of the weight average molecular weight to the number average molecular weight (Mw/Mn) in the range between 1.5 and 2.5 generally, which is smaller than that of polypropylene obtained by the conventional method, that is, the ratio of between 4 and 10. The ratio of Mw to Mn can be calculated by the universal calibration method using polystyrenes having known molecular weights as the standard materials by gel permeation chromatography.

Polypropylenes having different molecular weights and melt flow rates (MFR) can be obtained, when different metallocene catalysts are used. Therefore, polypropylene blends of two or more different polypropylenes having bimodal or multimodal molecular weight distributions can be used. In general, the MFR of the used polypropylene is at least 2 g/10 min.

The resin for the inner layer can be selected from the same resins as those used for the outer layer but independently from the resin for the outer layer. The resin for the inner layer preferably does not generate or absorb any odor since it will be in contact with contents in the bottle such as foods.

The layer of the adhesive resin (adhesive layer) can be provided between the layers when the adhesion between the resin composition of the present invention and the resins for the outer and inner layers is insufficient.

The layer structure of the multilayer bottle including the optional adhesive layer(s) may comprise (1) polyester resin layer/adhesive layer/gas barrier layer/adhesive layer/polyester layer, (2) polyester layer/adhesive layer/gas barrier layer/adhesive layer/polyolefin or (3) polyolefin layer/adhesive layer/gas barrier layer/adhesive layer/polyolefin layer. One or more regrind layers may be provided.

The thickness of each layer constituting the multilayer bottle is determined depending on the final use of the bottle. In general, the thicknesses of the inner and outer layers and the layer of the resin composition of the present invention (gas barrier layer) are preferably between 5 and 40 % and between 2 and 15 %, respectively of the whole wall thickness of the bottle.

The multilayer bottle can be produced by an extrusion blow molding method using a multilayer extrusion blow molding machine comprising a plurality of extruders and a multilayer die, or a multilayer coextrusion blow molding method comprising producing a multilayer parison by melt extruding the resin materials for the layers with a plurality of extruders and then blow molding the parison.

### (3) Inner containers for bag-in-box

The bag-in-box means an article comprising an outer cardboard box and an inner plastic container having a thin wall contained in the box.

The inner container is required to have a sufficient strength for resisting vibration during transportation and resistance to pin-hole formation and crack.

A material for the inner container is usually a multilayer film comprising a substrate layer which imparts mechanical strength to the container and a layer of a material having heat sealability. When the inner container is required to have the gas barrier properties, a gas barrier layer is provided between the substrate layer and the heat sealable layer. The resin composition of the present invention can be preferably used for the formation of the inner container for the bag-in-box, since it has good stretchability and flexibility and also excellent gas barrier properties.

The inner container for the bag-in-box comprising the layer made of the resin composition of the present invention generates very few pin-holes due to flexing or vibration usually encountered during transportation.

The inner container preferably comprises a layer of the resin composition of the present invention and a layer of other resin laminated on the former layer, while it may consist of a layer of the resin composition of the present invention.

The other resin is preferably one having good transparency, and examples of such resin are polyolefin resins, polystyrene resins, polyamide resins, polyethylene terephthalate, polycarbonate, polyvinyl chloride, and mixtures thereof. Among them, the polyolefin resins are preferable. The polyolefin resin may be the same as that used for the above multilayer bottles.

The thickness of the gas barrier layer made of the resin composition of the present invention is usually between 5 and 35 µm, preferably between 10 and 25 µm in view of the resistance to pin-hole formation.

The layer structure of the inner container may comprise (1) gas barrier layer alone, (2) gas barrier layer/first resin layer, (3) first resin layer/gas barrier layer/second resin layer, (4) first gas barrier layer/resin layer/second gas barrier layer (5) first resin layer/first gas barrier layer/second resin layer/second gas barrier layer or (6) first resin layer/first gas barrier layer/second resin layer/second gas barrier layer/third resin layer.
The adhesive layer may be interposed between any pair of the above layers.

The inner container can be formed by heat sealing the film having been cut in a predesigned shape to the box or by blowing.

### Examples

The present invention will be illustrated by the following examples, which do not limit the scope of the present invention in any way.

The properties in Examples 1-6 and Comparative Examples 1-3 were measured as follows:

### Oxygen permeability

The oxygen permeability was measured according to JIS K 7126. That is, a sample film was set in a commercial oxygen permeability meter (OX-TRAN 10/50 A (trade name) manufactured by MOCOM, USA), and the oxygen permeability was continuously measured at 23°C under dry conditions. The value obtained after the oxygen permeability became substantially constant was used as the oxygen permeability for the specific film. It took several hours to three days from the start of measurement before the stabilization of the measured value of oxygen permeability.

### Stretchability

The stretchability was evaluated from an SS curve obtained in the tensile test under heating and also by the biaxial stretching test using a bench biaxial stretching tester.

### (1) SS curve

A resin composition was heat pressed at 200°C for 3 minutes, and then cold pressed at 30°C for 5 minutes, and a sheet having a thickness of 300 µm was obtained. The obtained sheet was blanked in the shape of the JIS No. 1 dumbbell and used as a test sample.

The test sample was pulled at a rate of 1000 mm/min. using a temperature-control autograph (AGS 500 D manufactured by Shimadzu Corporation), and an SS curve was depicted. The SS curve shows a relationship between a strain and a stress.

The larger elongation at break or the smaller tensile stress at yield indicate better stretchability.

### (2) Biaxial stretching test

A square sample sheet (92 mm x 92 mm) was stretched with the bench biaxial stretching tester at a stretching rate of 5 m/min. at draw ratios of 3 x 3 times. Since the temperature control below 70°C was difficult, the stretching was started when the temperature indicator for the blower indicated the desired temperature by monitoring the temperature indicator.

The condition of the stretched sample sheet, that is, occurrence of breakage or crack of the intermediate layer was visually inspected and ranked according to the following criteria:
- 4:: Neither break nor crack appeared, and the condition was very good
- 3:: Few breakages or cracks appeared, and the condition was good
- 2:: Breakages and cracks appeared, and the condition was poor
- 1:: Many breakages and cracks appeared, and the condition was bad.

### Example 1

EVOH comprising 44 % of ethylene units based on the whole monomeric units and having the saponification degree for the vinyl ether units of 98 % or more (EP-E 105B manufactured by KURARAY, hereinafter referred to as "EVOH-E") was melt kneaded with a twin-screw extruder (the 40 mm⌀ extruder BT-40-S2-60-L manufactured by PLASTIC ENGINEERING KABUSHIKIKAISHA, L/D = 60), and a 50 wt. % aqueous solution of a polyaminoamide obtained by polymerization of adipic acid and diethylenetriamine (referred to as "PAA-1") (this solution being available under the trade name of SUMIREZ RESIN IM 60 from Sumitomo Chemical Co., Ltd.) was charged in the barrel of the extruder using a pump for supplying liquids. Then, the mixture was extruded at an extrusion temperature of 200°C at an extrusion rate of 13 kg/hr. while removing water from a vent hole provided in the middle section of the barrel, and pellets of the resin composition were obtained.

The weight ratio of PAA-1 to EVOH-E in the resin composition was 10:90.

The amine value of PAA-1 measured according to JIS K 7237 was 297.

The SS curve was recorded with this resin composition.

A three-layer film having a width of 300 mm and consisting of an intermediate layer of the above resin composition (having the thickness of 65 µm), and inner and outer layers of an ethylene-vinyl acetate copolymer (H 2081 manufactured by Sumitomo Chemical Co., Ltd., the content of vinyl acetate units: 16 wt. %, MFR: 2 g/10 min.) (each having the thickness of 173 µm) was produced by the T-die sheet molding method. The three-layer film was subjected to the biaxial stretching test. Also, the oxygen permeability of the stretched film, which was obtained by stretching the three-layer film at a bath temperature of 60°C, a blower temperature of 73°C at draw ratios of 3.0 x 3.0, was measured.

The results are shown in Table 1.

### Example 2

The resin composition was prepared and the stretchability of the resin composition and three-layer film, and oxygen permeability of the stretched film were evaluated in the same manner as in Example 1 except that the weight ratio of PAA-1 to EVOH-4 was changed to 15:85.

The results are shown in Table 1.

### Example 3

The resin composition was prepared and the stretchability of the resin composition and three-layer film, and oxygen permeability of the stretched film were evaluated in the same manner as in Example 1 except that the weight ratio of PAA-1 to EVOH-4 was changed to 20:80.

The results are shown in Table 1.

### Example 4

A polyaminoamide (TOHMIDE #225-X manufactured by FUJI CHEMICAL Co., Ltd., obtained by the polymerization of a polymerized tall oil fatty acid and triethylenetetramine) (referred to as "PAA-2") and EVOH-E were mixed in a weight ratio of 10:90 (PAA-2:EVOH-E) with a Henschel mixer, and the mixture was charged and kneaded in a twin-screw extruder and extruded to obtain pellets. PAA-2 had the viscosity of between 8,000 and 12,000 mPa.s at 40°C and the amine value of 340 according to JIS K 7237.

Then, the stretchability of the resin composition and three-layer film, and oxygen permeability of the stretched film were evaluated in the same manner as in Example 1.

The results are shown in Table 1.

### Example 5

The resin composition was prepared and the stretchability of the resin composition and three-layer film, and oxygen permeability of the stretched film were evaluated in the same manner as in Example 4 except that a polyaminoamide (TOHMIDE #235-X manufactured by FUJI CHEMICAL Co., Ltd., obtained by the polymerization of a polymerized tall oil fatty acid and triethylenetetramine) (referred to as "PAA-3") was used in place of PAA-2. PAA-3 had the viscosity of between 8,000 and 18,000 mPa.x at 25°C and the amine value of 390 according to JIS K 7237.

The results are shown in Table 1.

### Example 6

The resin composition was prepared and the stretchability of the resin composition and three-layer film, and oxygen permeability of the stretched film were evaluated in the same manner as in Example 4 except that a polyaminoamide (TOHMIDE #245-X manufactured by FUJI CHEMICAL Co., Ltd., obtained by the polymerization of a polymerized tall oil fatty acid and triethylenetriamine) (referred to as "PAA-4") was used in place of PAA-2. PAA-4 had the viscosity of between 1,500 and 3,000 mPa.x at 25°C and the amine value of 455 according to JIS K 7237.

The results are shown in Table 1.

### Comparative Example 1

The stretchability of EVOH alone and three-layer film using EVOH in place of the resin composition of PAA-1 and EVOH, and oxygen permeability of the stretched film were evaluated in the same manner as in Example 1.

The results are shown in Table 1.

### Comparative Example 2

The resin composition was prepared and the stretchability of the resin composition and three-layer film was evaluated in the same manner as in Example 1 except that Nylon 6/66 (UBE NYLON 5023 FD manufactured by UBE KOSAN) was used in place of PAA-1 and the weight ratio of Nylon 6/66 to EVOH-4 was 10:90.

The results are shown in Table 1.

### Comparative Example 3

The resin composition was prepared and the stretchability of the resin composition and three-layer film was evaluated in the same manner as in Comparative Example 2 except that Nylon 6/12 (UBE NYLON 7024 B manufactured by UBE KOSAN) was used in place of Nylon 6/66.

The results are shown in Table 1.

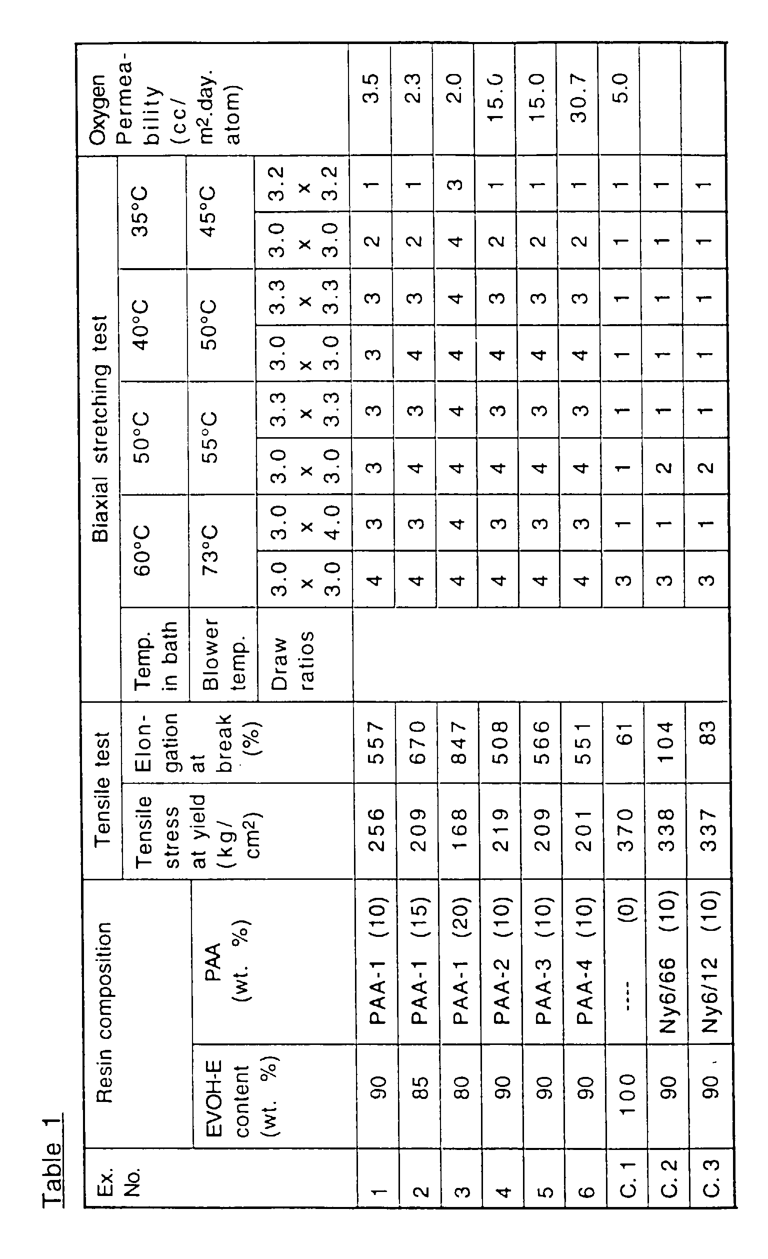

The properties in Examples 7-10 and Comparative Examples 4-6 were measured as follows:

### Heat shrinkage factor

A square sample film (100 mm x 100 mm) was immersed in water kept at 75°C for one minute, and then the lengths in the machine and cross directions were measured, and the shrinkage factor in each direction was calculated. The average value of the shrinkage factors in the two directions was used as the shrinkage factor in these examples.

### Oxygen permeability

The oxygen permeability was measured in the same manner as in Examples 1-6 and Comparative Examples 1-3.

### Example 7

An unstretched raw sheet having the layer structure of outer layer/adhesive layer/core layer/adhesive layer/outer layer was produced as follows:

The ethylene-butene-1 copolymer having the density of 0.895 g/cm³, melting point of 100°C, MFR of 2 g/10 min. and butene-1 unit content of 13 wt. % was used as the outer layer material, the pellet-form resin composition containing EVOH-E and PAA-1 which had been prepared in the same manner as in Example 1 was used as the core layer material, and polypropylene grafted with maleic anhydride was used as the adhesive layer material.

The unstretched tube was produced by co-extruding the above materials from a die for co-extruding a three-kind five-layer film having a diameter of 200 mm using an extruder having a screw diameter of 65 mm for the outer layers, an extruder having a screw diameter of 40 mm for the core layer, and an extruder having a screw diameter of 50 mm for the adhesive layer. The unstretched tube had the wall thickness of about 170 µm and the width of 310 mm (in the flattened state), and the thickness ratio (%) of the layers was 25/20/10/20/25.

The unstretched tube was heated to 60°C and stretched by the inflation biaxial stretching method at draw ratios of 3.5 times in the machine direction and 3.2 times in the cross direction, followed by heat setting while relaxing the film slightly, and a tube-form stretched film having a wall thickness of about 17 µm was obtained.

The film had the oxygen permeability of 20 cc/m².day.atm. and the heat shrinkage factor of 33 % (35 % and 31 % in the machine and cross directions, respectively). These oxygen permeability and heat shrinkage factor are both excellent.

The oxygen permeability for the core layer per 15 µm thickness was 2.3 cc/m².day.atm.

### Example 8

The stretched film was produced in the same manner as in Example 7 except that the resin composition containing EVOH-E and PAA-3 which had been prepared in the same way as in Example 5 was used.

The film had the oxygen permeability of 120 cc/m².day.atm. and the heat shrinkage factor of 35 % (36 % and 34 % in the machine and cross directions, respectively). These oxygen permeability and heat shrinkage factor are both excellent.

The oxygen permeability for the core layer per 15 µm thickness was 14 cc/m².day.atm.

### Comparative Example 4

The unstretched tube was produced in the same manner as in Example 7 except that EVOH-E alone was used as the core layer material. However, this tube could not be stretched to provide a film having the same thickness as that of the stretched film produced in Example 7, since this tube had bad stretchability.

### Example 9

The stretched film was produced in the same manner as in Example 8 except that the resin composition containing 98 wt. % of the ethylene-butene-1 copolymer having the density of 0.906 g/cm³, melting point of 108°C, MFR of 2.1 g/10 min. and butene-1 unit content of 5 wt. %, and 2 wt. % of monoglycerol oleate was used as the outer layer material, and the ethylene-propylene copolymer grafted with maleic anhydride was used as the adhesive layer material.

The film had the oxygen permeability of 120 cc/m².day.atm. and the heat shrinkage factor of 33 % (35 % and 31 % in the machine and cross directions, respectively). These oxygen permeability and heat shrinkage factor are both excellent.

The oxygen permeability for the core layer per 15 µm thickness was 14 cc/m².day.atm.

### Comparative Example 5

The unstretched tube was produced in the same manner as in Example 9 except that EVOH-E alone as used as the core layer material. However, this tube could not be stretched to provide a film having the same thickness as that of the stretched film produced in Example 9, since this tube had bad stretchability.

### Example 10

The stretched film was produced in the same manner as in Example 9 except that the thickness ratio of the layers were changed to 20/20/20/20/20.

The film had the oxygen permeability of 60 cc/m².day.atm. and the heat shrinkage factor of 34 % (37 % and 31 % in the machine and cross directions, respectively). These oxygen permeability and heat shrinkage factor are both excellent.

The oxygen permeability for the core layer per 15 µm thickness was 14 cc/m².day.atm.

### Comparative Example 6

The unstretched tube was produced in the same manner as in Example 10 except that EVOH-E alone as used as the core layer material. However, this tube could not be stretched to provide a film having the same thickness as that of the stretched film produced in Example 10, since this tube had bad stretchability.

### Example 15

The pellets of the resin composition were prepared in the same manner as in Example 1, and used as the core layer material for a molded article which was produced as follows:

A five-layered shaped article consisting of the LLDPE layer/adhesive resin layer/core layer/adhesive resin layer/LLDPE layer was produced by the inflation molding method using a plurality of extruders.
The materials for the layers were as follows:
LLDPE layers:
Ethylene-butene-1 random copolymer having the density of 0.9127 g/cm³ and MFR of 1.0 g/min (according to JIS K 6760).
Adhesive resin layer:
Acid-modified polyethylene (ADMER LF 300 manufactured by MITSUI PETROCHEMICAL Co., Ltd. having the density of 0.92 g/cm³ and melting point of 110°C)
The thickness of the article was 120 µm, and the thicknesses of the layers were 50/5/10/5/50 µm (from the outermost layer to the innermost layer).
The number of pin-holes was 3.

### Example 16

The molded article was produced in the same manner as in Example 15 except that the resin composition which had been prepared in the same way as in Example 5 was used as the core layer material.

The number of pin-holes was 6.

### Example 17

The pellets of resin composition were produced in the same manner as in Example 1 except that a polyaminoamide (TOHMIDE #427-A manufactured by FUJI CHEMICAL Co., Ltd., obtained by the polymerization of a polymerized tall oil fatty acid and triethylenetetramine) (referred to as "PAA-4") was used as the polyaminoamide. PAA-4 had the viscosity of 75,300 mPa.s at 40°C and the amine value of 251 according to JIS K 7237.

The molded article was produced in the same manner as in Example 15 except that the resin composition obtained in the above was used as the core layer material.

The number of pin-holes was 8.

### Comparative Example 10

The molded article was produced in the same manner as in Example 15 except that EVOH-E alone was used as the core layer material.

The number of pin-holes was 20.

## Claims

1. A resin composition comprising 2 to 30 wt. parts of a polyaminoamide and 98 to 70 wt. parts of a saponified ethylene-vinyl ester copolymer which comprises 20 to 60 % of ethylene units based on the whole monomeric units and has a saponification degree of the vinyl ester units of at least 90 %.

2. The resin composition according to claim 1, wherein said polyaminoamide is a polymer obtained from a dicarboxylic acid and a polyamine.

3. The resin composition according to claim 1, wherein said polyaminoamide is a polymer obtained from an aliphatic dicarboxylic acid and a polyamine.

4. The resin composition according to claim 1, wherein said polyaminoamide is a polymer obtained from a polyamine and at least one compound selected from the group consisting of adipic acid, azelaic acid and polymeric natural fatty acids.

5. The resin composition according to claim 1, wherein said polyaminoamide is a polymer obtained from a dicarboxylic acid and a polyalkylenepolyamine.

6. The resin composition according to claim 1, wherein said polyaminoamide is a polymer obtained from a dicarboxylic acid and diethylenetriamine.

7. The resin composition according to claim 1, wherein said polyaminoamide is a polymer obtained from adipic acid and diethylenetriamine.

8. The resin composition according to any one of claims 1 to 7, wherein said polyaminoamide has an amine value of between 100 and 550.

9. The resin composition according to any one of claims 1 to 8, which has an oxygen permeability of between 0.01 and 200 cc/m².day.atm per 15 µm of thickness at 23°C under dry conditions.

10. A shaped article comprising at least one layer which comprises a resin composition comprising 2 to 30 wt. parts of a polyaminoamide and 98 to 70 wt. parts of a saponified ethylene-vinyl ester copolymer which comprises 20 to 60 % of ethylene units based on the whole monomeric units and has a saponification degree of the vinyl ester units of at least 90 %.

11. The shaped article according to claim 10, which is a film.

12. The shaped article according to any one of claims 10 or 11, which further comprises at least one layer comprising a polyolefin resin.

13. The shaped article according to any one of claims 10 to 12, which further comprises at least one layer comprising at least one polyolefin resin selected from low density polyethylene, ionomer resins or their precursors, linear low density polyethylene, linear ethylene-α-olefin copolymers, ethylene-vinyl acetate copolymers and polyolefin resins prepared using metallocene catalysts.

14. The shaped article according to any one of claims 10 to 13, which is produced by stretching an unstretched sheet having at least one layer which comprises a resin composition comprising 2 to 30 wt. parts of a polyaminoamide and 98 to 70 wt. parts of a saponified ethylene-vinyl ester copolymer which comprises 20 to 60 % of ethylene units based on the whole monomeric units and has a saponification degree of the vinyl ester units of at least 90 %, at draw ratios of between 1.5 and 5 times in machine and cross directions.

15. The shaped article according to any one of claims 10 to 14, which is a film having a shrinkage factor of at least 20 %, when heated at 75°C for one minute.

16. The use of a resin composition comprising 2 to 30 wt. parts of a polyaminoamide and 98 to 70 wt. parts of a saponified ethylene-vinyl ester copolymer which comprises 20 to 60 % of ethylene units based on the whole monomeric units and has a saponification degree of the vinyl ester units of at least 90 % as a material for the production of a shaped article.

## Patentansprüche

1. Harzzusammensetzung, umfassend 2 bis 30 Gew.-Teile eines Polyaminoamids und 98 bis 70 Gew.-Teile eines verseiften Ethylen-Vinylester-Copolymers, das, bezogen auf die gesamten Monomereinheiten, 20 bis 60% Ethyleneinheiten umfaßt und einen Verseifungsgrad der Vinylestereinheiten von mindestens 90% besitzt.

2. Harzzusammensetzung nach Anspruch 1, wobei das Polyaminoamid ein Polymer darstellt, das aus einer Dicarbonsäure und einem Polyamin erhalten wurde.

3. Harzzusammensetzung nach Anspruch 1, wobei das Polyaminoamid ein Polymer darstellt, das aus einer aliphatischen Dicarbonsäure und einem Polyamin erhalten wurde.

4. Harzzusammensetzung nach Anspruch 1, wobei das Polyaminoamid ein Polymer darstellt, das aus einem Polyamin und mindestens einer Verbindung, ausgewählt aus Adipinsäure, Azelainsäure und natürlichen polymeren Fettsäuren, erhalten wurde.

5. Harzzusammensetzung nach Anspruch 1, wobei das Polyaminoamid ein Polymer darstellt, das aus einer Dicarbonsäure und einem Polyalkylenpolyamin erhalten wurde.

6. Harzzusammensetzung nach Anspruch 1, wobei das Polyaminoamid ein Polymer darstellt, das aus einer Dicarbonsäure und Diethylentriamin erhalten wurde.

7. Harzzusammensetzung nach Anspruch 1, wobei das Polyaminoamid ein Polymer darstellt, das aus Adipinsäure und Diethylentriamin erhalten wurde.

8. Harzzusammensetzung nach einem der Ansprüche 1 bis 7, wobei das Polyaminoamid einen Aminwert zwischen 100 und 550 besitzt.

9. Harzzusammensetzung nach einem der Ansprüche 1 bis 8, die eine Sauerstoffpermeabilität bei 23°C unter trockenen Bedingungen zwischen 0,01 und 200 cc/m²·Tag·atm pro 15 µm Dicke besitzt.

10. Geformter Gegenstand, umfassend mindestens eine Schicht, die eine Harzzusammensetzung mit 2 bis 30 Gew.-Teilen eines Polyaminoamids und 98 bis 70 Gew.-Teilen eines verseiften Ethylen-Vinylester-Copolymers umfaßt, das, bezogen auf die gesamten Monomereinheiten, 20 bis 60% Ethyleneinheiten umfaßt und einen Verseifungsgrad der Vinylestereinheiten von mindestens 90% besitzt.

11. Geformter Gegenstand nach Anspruch 10, der eine Folie darstellt.

12. Geformter Gegenstand nach einem der Ansprüche 10 oder 11, der außerdem mindestens eine Schicht umfaßt, die ein Polyolefinharz umfaßt.

13. Geformter Gegenstand nach einem der Ansprüche 10 bis 12, der außerdem mindestens eine Schicht umfaßt, die mindestens ein Polyolefinharz, ausgewählt aus Polyethylen niederer Dichte, Ionomerharzen oder ihren Vorstufen, linearem Polyethylen niederer Dichte, linearen Ethylen-α-Olefin-Copolymeren, Ethylen-Vinylacetat-Copolymeren und Polyolefinharzen, umfaßt, die unter Verwendung von Metallocenkatalysatoren hergestellt wurden.

14. Geformter Gegenstand nach einem der Ansprüche 10 bis 13, der durch Recken einer nicht gereckten Folie mit mindestens einer Schicht, die eine Harzzusammensetzung mit 2 bis 30 Gew.-Teilen eines Polyaminoamids und 98 bis 70 Gew.-Teilen eines verseiften Ethylen-Vinylester-Copolymers umfaßt, das, bezogen auf die gesamten Monomereinheiten, 20 bis 60% Ethyleneinheiten umfaßt und einen Verseifungsgrad der Vinylestereinheiten von mindestens 90% besitzt, bei Streckverhältnissen zwischen 1,5 und 5 mal in den Maschinen- und Querrichtungen hergestellt wird.

15. Geformter Gegenstand nach einem der Ansprüche 10 bis 14, der bei 1 Minute langem Erwärmen auf 75°C eine Folie mit einem Schrumpffaktor von mindestens 20% darstellt.

16. Verwendung einer Harzzusammensetzung, umfassend 2 bis 30 Gew.-Teile eines Polyaminoamids und 98 bis 70 Gew.-Teile eines verseiften Ethylen-Vinylester-Copolymers, das, bezogen auf die gesamten Monomereinheiten, 20 bis 60% der Ethyleneinheiten umfaßt und einen Verseifungsgrad der Vinylestereinheiten von mindestens 90% besitzt, als Material zur Herstellung eines geformten Gegenstands.

## Revendications

1. Composition de résine comprenant 2 à 30 parties en masse d'un polyaminoamide et 98 à 70 parties en masse d'un copolymère éthylène-ester de vinyle saponifié qui comprend 20 à 60 % d'unités d'éthylène par rapport aux unités monomères totales et a un degré de saponification des unités d'ester de vinyle d'au moins 90 %.

2. Composition de résine selon la revendication 1, dans laquelle ledit polyaminoamide est un polymère obtenu à partir d'un acide dicarboxylique et d'une polyamine.

3. Composition de résine selon la revendication 1, dans laquelle ledit polyaminoamide est un polymère obtenu à partir d'un acide dicarboxylique aliphatique et d'une polyamine.

4. Composition de résine selon la revendication 1, dans laquelle ledit polyaminoamide est un polymère obtenu à partir d'une polyamine et d'au moins un composé choisi dans le groupe consistant en l'acide adipique, l'acide azélaïque et les acides gras naturels polymères.

5. Composition de résine selon la revendication 1, dans laquelle ledit polyaminoamide est un polymère obtenu à partir d'un acide dicarboxylique et d'une polyalkylènepolyamine.

6. Composition de résine selon la revendication 1, dans laquelle ledit polyaminoamide est un polymère obtenu à partir d'un acide dicarboxylique et de la diéthylènetriamine.

7. Composition de résine selon la revendication 1, dans laquelle ledit polyaminoamide est un polymère obtenu à partir d'acide adipique et de diéthylènetriamine.

8. Composition de résine selon l'une quelconque des revendications 1 à 7, dans laquelle ledit polyaminoamide a un indice d'amine situé entre 100 et 550.

9. Composition de résine selon l'une quelconque des revendications 1 à 8, qui a une perméabilité à l'oxygène située entre 0,01 et 200 cm³/m².j.atm par 15 µm d'épaisseur à 23°C dans des conditions sèches.

10. Article mise en forme comprenant au moins une couche qui comprend une composition de résine comprenant 2 à 30 parties en masse d'un polyaminoamide et 98 à 70 parties en masse d'un copolymère éthylène-ester de vinyle saponifié qui comprend 20 à 60 % d'unités d'éthylène par rapport aux unités monomères totales et a un degré de saponification des unités d'ester de vinyle d'au moins 90 %.

11. Article mis en forme selon la revendication 10 qui est un film.

12. Article mis en forme selon l'une quelconque des revendications 10 et 11, qui comprend en outre au moins une couche comprenant une résine de polyoléfine.

13. Article mis en forme selon l'une quelconque des revendications 10 à 12, qui comprend en outre au moins une couche comprenant au moins une résine de polyoléfine choisie parmi le polyéthylène basse densité, les résines ionomères ou leurs précurseurs, le polyéthylène basse densité linéaire, les copolymères éthylène-α-oléfine linéaires, les copolymères éthylène-acétate de vinyle et les résines de polyoléfine préparées à l'aide de catalyseurs de type métallocène.

14. Article mis en forme selon l'une quelconque des revendications 10 à 13, qui est produit par étirage d'une feuille non étirée ayant au moins une couche qui comprend une composition de résine comprenant 2 à 30 parties en masse d'un polyaminoamide et 98 à 70 parties en masse d'un copolymère éthylène-ester de vinyle saponifié qui comprend 20 à 60 % d'unités d'éthylène par rapport aux unités monomères totales et a un degré de saponification des unités d'ester de vinyle d'au moins 90 %, à des rapports d'étirage situés entre 1,5 et 5 fois dans le sens machine et dans le sens transversal.

15. Article mis en forme selon l'une quelconque des revendications 10 à 14, qui est un film ayant un facteur de retrait d'au moins 20 % quand il est chauffé à 75°C pendant une minute.

16. Utilisation d'une composition de résine comprenant 2 à 30 parties en masse d'un polyaminoamide et 98 à 70 parties en masse d'un copolymère éthylène-ester de vinyle saponifié qui comprend 20 à 60 % d'unités d'éthylène par rapport aux unités monomères totales et a un degré de saponification des unités d'ester de vinyle d'au moins 90 % comme matériau pour la production d'un article mis en forme.
